# DEMANDE DE BREVET EUROPEEN

(11) **EP 4 498 225 A1**
(43) Date de publication de la demande: **29.01.2025**
(21) Numéro de dépôt: 24191181.7
(22) Date de dépôt: 26.07.2024
(51) Int. Cl.: G06F 3/147

(54) **SYSTÈME D AFFICHAGE DANS UN COCKPIT D AÉRONEF ET PROCÉDÉ D AFFICHAGE ASSOCIÉ**

(30) Priorité: 28.07.2023 FR 2308187
(71) Demandeur: THALES, 92190 Meudon (FR)
(72) Inventeur: LEULLIER, François, 33700 MERIGNAC (FR); BOURGERIE, Xavier, 33700 MERIGNAC (FR); DOTTE, Sébastien, 33700 MERIGNAC (FR)
(74) Mandataire: Lavoix

(57) **Abrégé**

La présente invention concerne système d'affichage (10) dans un cockpit d'aéronef, comprenant :
- une pluralité de surfaces d'affichage (20) ;
- un module de traitement (12) configuré pour héberger des applications (30) aptes à générer des images à afficher sur une ou plusieurs surfaces d'affichage (20) ;
- un module de génération graphique (14) configuré pour générer un flux graphique composé comprenant des images issues d'une ou de plusieurs applications (30) et destinées à être affichées sur des surfaces d'affichage (20) différentes ;
dans lequel chaque surface d'affichage (20) est configurée pour recevoir ledit flux graphique composé et pour en extraire des images destinées à être affichées sur cette surface d'affichage (20).

## Description

La présente invention concerne un système d'affichage dans un cockpit d'aéronef.

La présente invention concerne également un procédé d'affichage associé à un tel système affichage.

Il existe dans l'état de la technique différentes architectures d'affichage dans le cockpit d'aéronef.

En particulier, on connait les architectures d'affichage dites distribuées ou intégrées qui favorisent les disponibilités du champ d'affichage.

De manière connue en soi, dans les architectures distribuées, chaque écran d'affichage est associé à un module de génération graphique dit également générateur graphique de type GPU (de l'anglais « Graphics Processing Unit »).

Ce générateur permet de générer des flux graphiques destinés à cet écran à partir des images fournies par un module de traitement, par exemple un processeur de type CPU (de l'anglais « Central Processing Unit »).

Dans les architectures intégrées (appelées également « Smart Dispatch Displays »), le module de génération graphique GPU et le module de traitement CPU sont intégrées dans l'écran.

Dans les deux cas, un tel module de traitement CPU est apte à générer les flux graphiques correspondants à partir des images fournies par les applications hébergées sur ce module de traitement.

Ces applications dépendent de l'usage donné à l'écran d'affichage correspondant et peuvent par exemple comprendre un altimètre, un horizon, un relief de la surface survolée, etc. Cet écran d'affichage peut ainsi correspondre à un écran primaire de vol de type PFD (de l'anglais « Primary Flight Display »).

De manière également connue en soi, les écrans d'affichage dans le cockpit sont au moins doublés pour assurer le niveau de disponibilité requis par le domaine aéronautique.

Ainsi par exemple, le cockpit comprend au moins deux écrans primaires de vol dont le fonctionnement est assuré par les modules de génération graphique et les modules de traitement distincts.

On conçoit alors que les moyens nécessaires pour faire fonctionner ces différents écrans dans un cockpit d'aéronef présentent un poids, un volume et un câblage très conséquents. Cela présente alors des coûts de production et d'exploitation conséquents.

La présente invention permet de remédier à ces inconvénients et propose notamment un système d'affichage pour un cockpit d'aéronef qui permet de réduire le poids, le volume et le câblage nécessaires pour son installation, tout en assurant le niveau de disponibilité requis par le domaine aéronautique. Cela permet alors de réduire les coûts de production et d'exploitation de ces différents moyens.

À cet effet, l'invention a pour objectif un système d'affichage dans un cockpit d'aéronef.

Le dispositif comprend une pluralité de surfaces d'affichage ; un module de traitement configuré pour héberger des applications aptes à générer des images à afficher sur une ou plusieurs surfaces d'affichage ; un module de génération graphique configuré pour générer un flux graphique composé comprenant des images issues d'une ou de plusieurs applications et destinées à être affichées sur des surfaces d'affichage différentes et dans lequel chaque surface d'affichage est configurée pour recevoir ledit flux graphique composé et pour en extraire des images destinées à être affichées sur cette surface d'affichage.

Selon d'autres aspects avantageux de l'invention, le système comprend une ou plusieurs des caractéristiques suivantes, prise(s) isolément ou suivant les combinaisons techniquement possibles :
- un dispositif de séparation configuré pour recevoir ledit flux graphique composé et pour le diviser en au moins deux flux graphiques identiques destinés à être reçus par des surfaces d'affichage différentes ;
- le dispositif de séparation est un dispositif passif, tel qu'un splitter optique ;
- le module de génération graphique est configuré pour générer un flux graphique simple comprenant des images issues d'une ou de plusieurs applications et destinées à être affichées sur une même surface d'affichage ;
- chaque surface d'affichage est configurée pour adapter, à la réception dudit flux graphique composé, les images correspondant à cette surface d'affichage, en utilisant des paramètres de configuration ;
- un module d'acquisition configuré pour acquérir chaque commande exercée en relation avec chaque surface d'affichage et pour la transmettre au module de traitement ;
- le module de traitement étant configuré pour traiter chaque commande acquise par le module d'acquisition, en fonction de la surface d'affichage correspondant à cette commande ;
- le module de traitement est configuré pour traiter chaque commande acquise par le module d'acquisition selon un référentiel correspondant à la surface d'affichage correspondant à cette commande ;
- une surface d'affichage principale raccordée audit module de génération graphique ;
- au moins deux surfaces d'affichage supplémentaires, avantageusement raccordées au module de génération graphique ;
- le module de traitement est configuré pour
   dans un mode de fonctionnement normal, générer un flux composé comprenant des images destinées à être affichées uniquement par l'une des surfaces d'affichage supplémentaires ;
   dans un mode de fonctionnement dégradé, générer un flux composé comprenant des images destinées à être affichées sur chacune des surfaces d'affichage supplémentaires ;
   chaque surface d'affichage supplémentaire étant configurée pour recevoir ledit flux graphique composé et pour en extraire des images destinées à être affichées sur cette surface d'affichage.

L'invention a également pour objectif un procédé d'affichage dans un cockpit d'aéronef, comprenant les étapes suivantes :
- générer des images à afficher sur une ou plusieurs surfaces d'affichage, par une ou plusieurs applications ;
- générer un flux graphique composé comprenant des images issues d'une ou de plusieurs applications et destinées à être affichées sur des surfaces d'affichage différentes ;
- recevoir ledit flux graphique composé par chaque surface d'affichage ;
- extraire des images destinées à être affichées sur la surface d'affichage correspondante.

L'invention a finalement pour objectif un programme d'ordinateur comportant des instructions logicielles qui, lorsqu'elles sont exécutées par un ordinateur, mettent en oeuvre le procédé tel que défini ci-dessus.

L'invention apparaitra plus clairement à la lecture de la description qui va suivre, donnée uniquement à titre d'exemple non-limitatif et faite en référence aux dessins dans lesquels :
- [Fig 1] la figure 1 est une vue schématique d'un système d'affichage selon l'invention ;
- [Fig 2] la figure 2 est une vue schématique d'un dispositif de séparation faisant partie du système d'affichage de la figure 1 ;
- [Fig 3] la figure 3 est une vue schématique d'un système d'affichage selon un autre exemple de réalisation ;
- [Fig 4] la figure 4 est une vue schématique illustrant le fonctionnement du système d'affichage de la figure 3 dans un mode de fonctionnement dégradé ; et
- [Fig 5] la figure 5 est un organigramme d'un procédé d'affichage mis en oeuvre par le système d'affichage de la figure 1 ou de la figure 3.

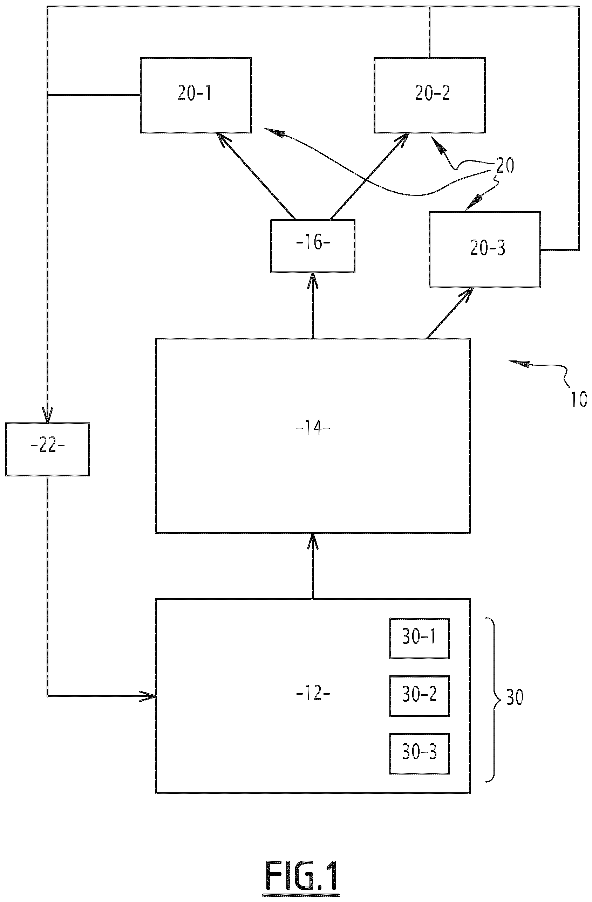

La figure 1 illustre en effet un système d'affichage 10 selon l'invention. Ce système d'affichage 10 est utilisable dans un cockpit d'aéronef.

Par « aéronef », on entend tout engin pilotable par un ou plusieurs opérateurs à partir d'un cockpit de celui-ci.

Le cockpit peut être embarqué dans l'aéronef comme cela est notamment le cas d'un avion ou d'un hélicoptère. En variante, le cockpit peut être distant de l'aéronef comme cela est par exemple le cas d'un drone.

Comme cela est illustré sur la figure 1, le système d'affichage 10 comprend un module de traitement 12, un module de génération graphique 14, un dispositif de séparation 16, une pluralité de surfaces d'affichage 20 et un module d'acquisition 22. Dans l'exemple de la figure 1, trois surfaces d'affichage à savoir les surfaces 20-1 à 20-3 sont représentées.

Le module de traitement 12 est par exemple un processeur de type CPU qui est configuré pour héberger des applications 30, avantageusement des applications avioniques.

Sur la figure 1, trois applications avioniques, à savoir l'application 30-1, l'application 30-2 et l'application 30-3 sont représentées.

Le module de traitement 12 peut par exemple représenter un processeur CPU connu en soi associé éventuellement à une mémoire vive et une mémoire non volatile qui stocke les applications 30 précitées.

Selon un autre exemple de réalisation, le module de traitement 12 se présente sous toute une autre forme adaptée qui comprend par exemple un circuit logique programmable de type FPGA (de l'anglais « Field Programmable Gate Array »).

Chacune des applications 30 permet de générer des images qui sont destinées à être affichées sur au moins l'une des surfaces d'affichage 20.

Par exemple, ces images représentent la position actuelle de l'aéronef, son horizon, son altitude, ou toute autre donnée destinée au pilotage de l'aéronef.

Le module de génération graphique 14, connu également sous l'appellation de GPU (de l'anglais « Graphics Processing Unit »), est configuré pour générer des flux graphiques à partir des images issues d'une ou de plusieurs applications 30 hébergées par le module de traitement 12.

Plus particulièrement, le module de génération 14 est apte à générer un flux graphique simple qui comprend des images issues d'une ou de plusieurs applications 30 destinées à être affichées sur une seule surface d'affichage 20.

Dans l'exemple de la figure 1, l'application 30-3 est apte à générer par exemple des images destinées à être affichées uniquement sur la surface d'affichage 20-3. Dans un tel cas, le module de génération graphique 14 permet de générer un flux graphique simple à partir des images fournies par cette application 30-3 qui est transmis par la suite uniquement à la surface d'affichage 20-3.

Le module de génération graphique 14 permet en outre de générer un flux graphique composé qui comprend des images issues d'une ou de plusieurs applications 30 et destinées à être affichées sur des surfaces d'affichage 20 différentes.

Ainsi, par exemple, dans l'exemple de la figure 1, le module de génération graphique 14 permet de générer un flux graphique composé à partir des images fournies par les applications 30-1 et 30-2. Ce flux graphique composé est alors destiné aux deux surfaces d'affichage 20-1 et 20-2, comme cela sera expliqué en détail par la suite.

Chacune des surfaces d'affichage 20 est destinée à recevoir un flux graphique issu du module de génération graphique 14 pour afficher au moins certaines images contenues dans ce flux.

En particulier, dans le cas d'un flux graphique simple, la surface d'affichage 20 correspondante permet d'afficher l'ensemble des images contenues dans ce flux.

Dans le cas d'un flux graphique composé, la surface d'affichage 20 correspondante permet d'extraire de ce flux graphique composé uniquement les images qui sont destinées à être affichées sur cette surface d'affichage 20.

En particulier, une telle surface d'affichage 20 est configurée pour recevoir un flux graphique composé généré par le module de génération graphique 14 et pour extraire de ce flux uniquement les images destinées à être affichées par cette surface d'affichage 20. Pour cela, la surface d'affichage 20 correspondante est configurée pour recevoir des paramètres de configuration issus par exemple du module de traitement 12 ou alors du module de génération graphique 14 qui lui permet de distinguer les images qui sont destinées à être affichées sur cette surface des images destinées à être affichées sur les autres surfaces d'affichage.

Pour ce faire, chaque surface d'affichage 20 est par exemple adaptée à appliquer la technique de type « cropping » permettant d'extraire les images correspondantes.

Les paramètres de configuration peuvent par exemple être statiques, c'est-à-dire définir de manière prédéterminée la manière de distinction des images correspondantes, ou alors dynamique, c'est-à-dire définir de manière dynamique la manière de distinction des images correspondantes.

Ces paramètres de configuration peuvent par exemple être transmis à chacune des surfaces d'affichage 20 par une liaison dédiée ou intégrée au flux graphique.

Avantageusement, chaque surface d'affichage 20 est configurée en outre pour adapter les images destinées à être affichées sur cette surface qui sont issues de flux graphique composé.

Par exemple, chaque surface d'affichage 20 est adaptée pour appliquer à de telles images une opération de mise à l'échelle ou alors, selon certains exemples, une opération d'adaptation de la résolution de cette image. L'adaptation peut par exemple se faire en fonction de paramètres de configuration transmis par le module de traitement 12 ou alors par le module de génération graphique 14.

Chaque surface d'affichage 20 présente par exemple un écran d'affichage complet ou au moins une partie de celui-ci combinée éventuellement avec une partie d'au moins un autre écran d'affichage, ou alors au moins une partie d'un afficheur de type tête haute.

Pour délivrer à chaque surface d'affichage 20 le flux graphique correspondant, le module de génération graphique 14 est raccordé par une liaison adaptée. Cette liaison peut par exemple être une liaison optique.

Pour les surfaces d'affichage 20 destinées à afficher uniquement les flux graphiques simples, le module de génération graphique 14 peut être raccordé de manière directe.

Pour les surfaces d'affichage 20 destinées à recevoir les flux graphiques composés, le module de génération graphique 14 est raccordé via le dispositif de séparation 16.

En particulier, le dispositif de séparation 16 permet de recevoir un flux graphique composé issu du module de génération graphique 14 pour le diviser en au moins deux flux graphiques identiques qui sont alors destinés à être reçus par des surfaces d'affichage 20 différentes.

Dans l'exemple de la figure 1, un seul dispositif de séparation 16 est illustré. Toutefois, il doit être compris que de manière plus générale, plusieurs dispositifs de séparation 16 possibles peuvent être agencés de manière parallèle ou au moins certains d'entre eux de manière séquentielle pour diviser un même flux graphique en au moins trois flux graphiques.

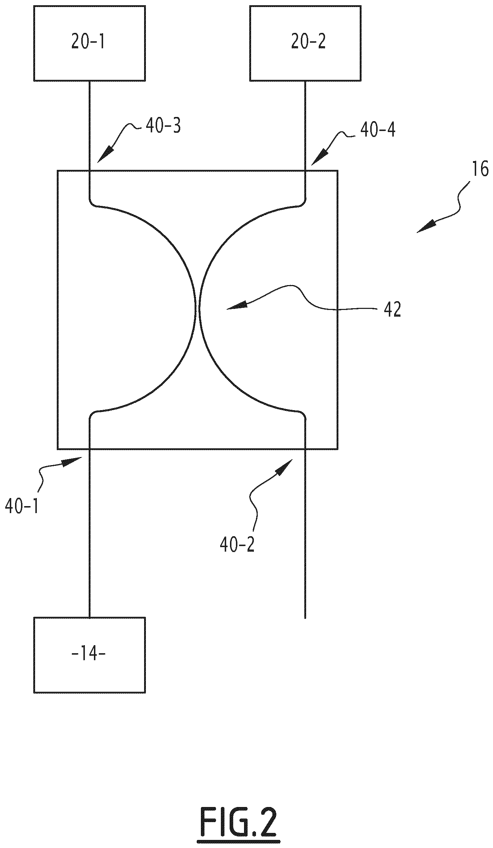

Avantageusement, le dispositif de séparation 16 est un dispositif passif. Cela signifie que ce dispositif de séparation permet de séparer les flux correspondants de manière indifférente de la nature et du contenu de ce flux. Avantageusement, ce dispositif de séparation 16 présente un splitter optique tel que par exemple illustré sur la figure 2.

En référence à cette figure 2, le dispositif de séparation 16 comprend deux voies optiques d'entrée à savoir les voies 40-1 et 40-2 ainsi que deux voies optiques de sortie à savoir les voies 40-3 et 40-4. Le dispositif de séparation optique 16 comprend en outre une zone de mélange 42 permettant de mélanger les flux optiques entrant par les voies d'entrée 40-1 et 40-2 pour les séparer ensuite en deux flux optiques indépendants qui ressortent par les voies de sortie 40-3 et 40-4.

Dans l'exemple de la figure 2, la voie d'entrée 40-1 est raccordée au module de génération graphique 14 alors que chacune des voies de sortie 40-3, 40-4 est raccordée respectivement à la surface d'affichage 20-1 et à la surface d'affichage 20-2. Dans l'exemple de cette figure, la voie d'entrée 40-2 n'est pas utilisée.

Le module d'acquisition 22 est configuré pour acquérir chaque commande exercée en relation avec chaque surface d'affichage 20 pour transmettre cette commande au module de traitement 12.

En particulier, par commande exercée en relation avec une surface d'affichage 20, on entend toute action exercée par l'opérateur pour commander ou modifier l'affichage sur la surface d'affichage 20 correspondante.

Par exemple, lorsqu'une surface d'affichage 20 présente une surface tactile, une telle commande décrit chaque mouvement tactile exercé par l'opérateur en relation avec cette surface d'affichage 20.

En variante ou en complément, une commande exercée en relation avec une surface d'affichage 20 tactile ou non peut être aussi introduite par un dispositif d'introduction externe de type CCD (de l'anglais « Cursor Control Device »).

Le module de traitement 12 permet de traiter chaque commande acquise par le module d'acquisition 22 en fonction de la surface d'affichage 20 correspondant à cette commande.

En particulier, le module de traitement 12 permet de traiter chaque commande acquise par le module d'acquisition 22 selon un référentiel correspondant à la surface d'affichage 20 correspondant à cette commande.

Autrement dit, le module de traitement 12 permet de ramener chaque commande exercée en relation avec chaque surface d'affichage 20 dans le référentiel source des images correspondant à cette surface d'affichage 20.

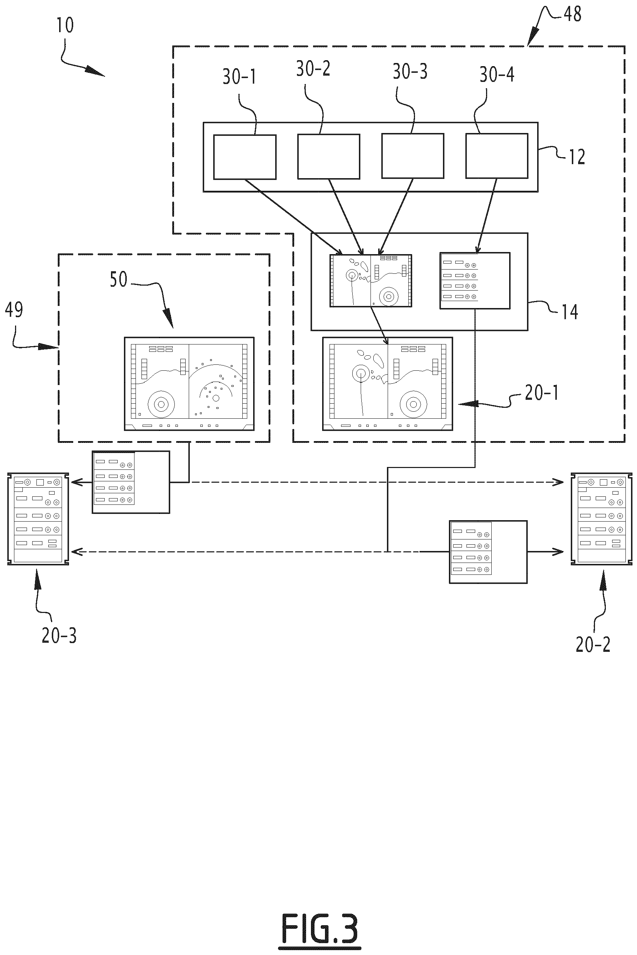

La figure 3 illustre un autre exemple de réalisation du système d'affichage 10.

Selon cet exemple, le système d'affichage 10 comprend une chaine d'affichage 48 implémentée selon une architecture de type intégrée ou « Smart Dispatch Display ».

Cette chaine d'affichage 48 comprend une surface d'affichage principale 20-1, un module de traitement 12 et un module de génération graphique 14, tels que décrits précédemment.

De plus, selon cet exemple, la chaine d'affichage 48 est raccordée aux deux surfaces d'affichage supplémentaires, à savoir les surfaces d'affichage supplémentaires 20-2 et 20-3. Chaque surface d'affichage supplémentaire 20-2 et 20-3 présente ainsi un écran d'affichage implémenté selon l'architecture de type distribuée. Le module d'acquisition 22 du système d'affichage 10 est associé à chaque surface d'affichage 20-1, 20-2 et 20-3, et est apte à acquérir des commandes exercées en relation avec chacune de ces surfaces d'affichage.

Dans l'exemple de la figure 3, le système d'affichage 10 comprend en outre une chaine d'affichage 49 comprenant une deuxième surface d'affichage principale 50. Cette chaine d'affichage 49 est raccordée également aux deux surfaces d'affichage supplémentaires 20-2 et 20-3 comme cela est illustré sur la figure 3.

Tout comme la chaine d'affichage 48, la chaine d'affichage 49 est par exemple implémentée selon une architecture de type intégrée et comprend un module de traitement et un module de génération graphique analogues à ceux décrits précédemment. Pour les raisons de simplicité, seule la deuxième surface d'affichage principale 50 est illustrée sur la figure 3.

Avantageusement, l'une des chaines d'affichage 48, 49 peut former une chaine de traitement de type « COM » et l'autre une chaine de traitement de type « MON ». Autrement dit, les chaines d'affichage 48, 49 sont conçues pour fonctionner en parallèle.

Dans le mode de fonctionnement normal, le module de génération graphique 14 de la figure 3 est apte à transmettre un flux graphique simple à la surface d'affichage principale 20-1.

Ce flux graphique simple comprend par exemple les images générées par les applications 30-1, 30-2, 30-3 de la figure 3.

La surface d'affichage principale 20-1 est apte ainsi à représenter ce flux graphique simple.

Dans le mode de fonctionnement normal, le module de génération graphique 14 est apte en outre à générer un flux graphique composé à partir des images fournies par l'application 30-4 hébergée sur le module de traitement 12.

Ce flux graphique composé peut être affiché uniquement sur la surface d'affichage supplémentaire 20-2 connectée directement au module de génération graphique 14.

Dans le mode de fonctionnement normal, l'affichage sur les surfaces d'affichage 50 et 20-3 est mis en oeuvre de manière analogue par la chaine d'affichage 49.

Le mode de fonctionnement dégradé peut par exemple survenir lorsque la surface d'affichage principale 50 n'est plus disponible ou alors la chaine d'affichage 49 a un autre type de défaillance.

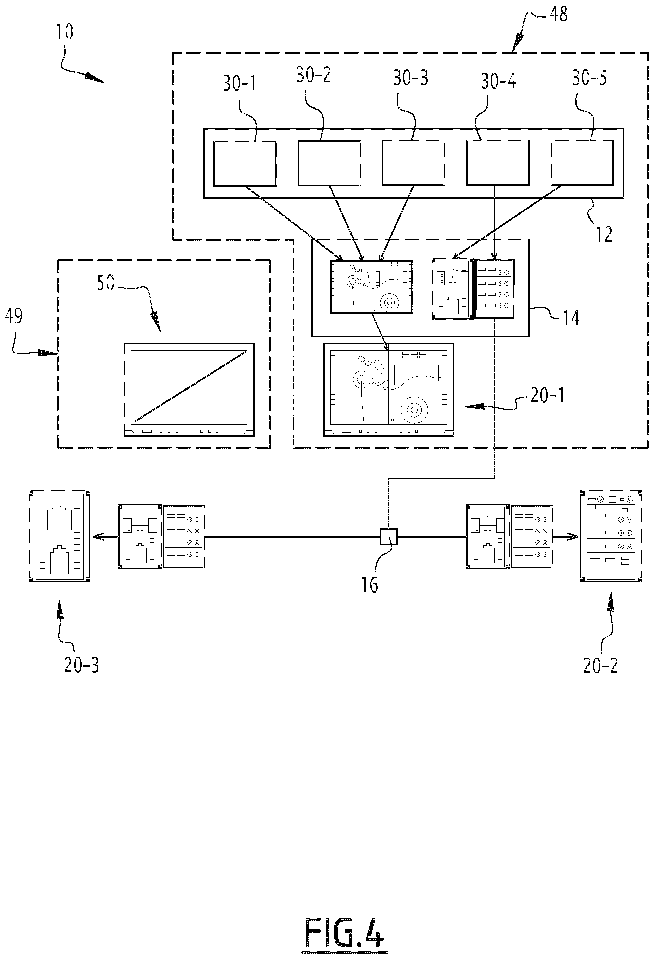

Ce cas est illustré plus en détail sur la figure 4.

En particulier, dans un tel cas, le module de traitement 12 de la chaine d'affichage 48 est apte à mettre en oeuvre encore l'application 30-5 qui correspond à la capacité perdue par l'autre chaine d'affichage 49.

Dans ce cas, le module de génération graphique 14 est apte à générer un flux graphique composé à partir des images fournies à la fois par l'application 30-4 comme c'était le cas dans le mode de fonctionnement normal mais aussi à partir de l'application 30-5.

Également comme dans le cas précédent, le module de génération graphique 14 est apte en outre à générer un flux graphique simple pour la surface d'affichage principale 20-1. Ce flux graphique simple reste inchangé par rapport à celui du mode de fonctionnement normal.

Puis, le flux graphique composé est dupliqué entre les surfaces d'affichage supplémentaires 20-2, 20-3. Pour ce faire, le dispositif de séparation 16 est agencé entre ces surfaces d'affichage supplémentaires 20-2, 20-3 et la surface d'affichage principale 20-1.

À la réception du flux graphique composé, la surface d'affichage supplémentaire 20-2 en extrait alors les images générées par l'application 30-4 alors que la surface d'affichage supplémentaire 20-3 extrait de ce flux graphique composé les images générées par l'application 30-5.

Pour cela, le module de traitement 12 ou alors le module de génération graphique 14 peut transmettre à cette surface d'affichage supplémentaire 20-3 des paramètres de configuration lui signalant qu'il doit traiter le flux graphique composé au lieu du flux graphique transmis par la surface d'affichage 50.

Bien entendu, d'autres exemples d'agencement de surfaces d'affichage d'entre eux sont également possibles.

Par exemple, il est possible de connecter indirectement les surfaces d'affichage supplémentaires 20-2, 20-3 au module de génération graphique 14, par exemple via la surface d'affichage principale 20-1. Il est également possible de piloter le fonctionnement du dispositif de séparation 16 de sorte qu'il fasse la séparation seulement dans le mode de fonctionnement dégradé par exemple.

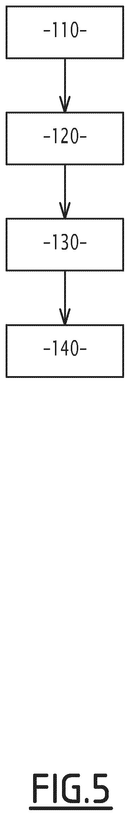

Le procédé d'affichage dans le cockpit d'aéronef mis en oeuvre par le système d'affichage 10 sera désormais expliqué en référence à la figure 5 illustrant un organigramme de ses étapes.

Lors d'une étape initiale 110, les applications 30 hébergées par le module de traitement 12 génèrent des images à afficher sur une ou plusieurs surfaces d'affichage 20.

Lors de l'étape suivante 120, le module de génération graphique 14 génère des flux graphiques comprenant les images issues de ces applications 30.

En particulier, le module de génération graphique 14 génère un flux graphique composé comprenant des images issues d'une ou de plusieurs applications 30 qui sont destinées à être affichées sur des surfaces d'affichage 20 différentes.

Avantageusement, le module de génération graphique 14 génère également un flux graphique simple à partir des images destinées à être affichées sur une seule surface d'affichage 20.

Lors de l'étape suivante 130 les surfaces d'affichage reçoivent les flux graphiques générés par le module de génération graphique 14.

En particulier, au moins deux surfaces d'affichage reçoivent le même flux graphique composé généré par le module de génération graphique 14.

Avantageusement, au moins une autre surface d'affichage reçoit également un flux graphique simple.

Lors de l'étape suivante 140, chacune des surfaces d'affichage 20 ayant reçu le flux graphique composé extrait de ce flux des images qui lui correspondent.

Par exemple, lorsque le flux graphique composé comprend des images destinées à être affichées sur deux surfaces d'affichage 20 différentes, chacune de ces surfaces d'affichage 20 extrait les images propres à cette surface d'affichage 20.

Par ailleurs, lors de cette extraction et comme cela a été mentionné précédemment, chaque surface d'affichage 20 peut adapter les images reçues par exemple en faisant la mise à échelle ou alors en modifiant la résolution selon des techniques connues en soi.

Les surfaces d'affichage 20 ayant reçu le flux graphique simple peuvent alors l'afficher directement.

Également et comme cela a été mentionné précédemment, au moins certaines surfaces d'affichage peuvent simplement faire transiter les flux graphiques simple ou composé sans afficher les images contenues dans ces flux.

En outre, l'extraction des images des flux correspondants se fait selon des paramètres de configuration transmis par exemple préalablement par le module de traitement 12 ou le module de génération graphique 14.

Lorsque le système d'affichage 10 doit changer son mode de fonctionnement, par exemple passer d'un mode de fonctionnement normal à un mode de fonctionnement dégradé suite par exemple à une défaillance survenue dans une chaine d'affichage, le module de traitement 12 ou le module de génération graphique 14 transmet aux surfaces d'affichage correspondantes des nouveaux paramètres de configuration pour modifier la manière d'extraction des images par les surfaces d'affichage correspondantes.

On conçoit alors que la présente invention présente un certain nombre d'avantages.

Tout d'abord, l'invention permet d'utiliser un seul module de génération graphique et un seul module de traitement pour un nombre de surfaces d'affichage supérieur au nombre de flux graphiques qu'il sait générer normalement. Cela permet d'exploiter au mieux les ressources de calcul de ces modules et de réduire donc leur nombre en cas de besoin.

Cela permet également de réduire le poids, le volume, le coût et le câblage de l'installation du système d'affichage.

L'invention reste particulièrement avantageuse lorsqu'il est nécessaire de mettre en oeuvre plusieurs chaines d'affichage par exemple en parallèle.

Dans un tel cas, en cas de défaillance de l'une des chaines d'affichage, l'autre chaine d'affichage peut prendre le relai afin d'éviter la perte complète des surfaces d'affichage.

Enfin, le système d'affichage selon l'invention ne requiert que de très peu de modification du système d'affichage existant. En particulier, de manière générale, seul l'ajout d'un dispositif de séparation 16 peut être nécessaire.

Toutefois, cet ajout peut être fait de manière particulièrement simple, le fonctionnement en soi d'un tel dispositif de séparation est simple étant donné qu'il présente un dispositif passif.

## Revendications

1. Système d'affichage (10) dans un cockpit d'aéronef, comprenant :
- une pluralité de surfaces d'affichage (20) ;
- un module de traitement (12) configuré pour héberger des applications (30) aptes à générer des images à afficher sur une ou plusieurs surfaces d'affichage (20) ;
- un module de génération graphique (14) configuré pour générer un flux graphique composé comprenant des images issues d'une ou de plusieurs applications (30) et destinées à être affichées sur des surfaces d'affichage (20) différentes ;
dans lequel chaque surface d'affichage (20) est configurée pour recevoir ledit flux graphique composé et pour en extraire des images destinées à être affichées sur cette surface d'affichage (20).

2. Système d'affichage (10) selon la revendication 1, comprenant en outre un dispositif de séparation (16) configuré pour recevoir ledit flux graphique composé et pour le diviser en au moins deux flux graphiques identiques destinés à être reçus par des surfaces d'affichage (20) différentes.

3. Système d'affichage (10) selon la revendication 2, dans lequel le dispositif de séparation (16) est un dispositif passif, tel qu'un splitter optique.

4. Système d'affichage (10) selon l'une quelconque des revendications précédentes, dans lequel le module de génération graphique (14) est configuré pour générer un flux graphique simple comprenant des images issues d'une ou de plusieurs applications (30) et destinées à être affichées sur une même surface d'affichage (20).

5. Système d'affichage (10) selon l'une quelconque des revendications précédentes, dans lequel chaque surface d'affichage (20) est configurée pour adapter, à la réception dudit flux graphique composé, les images correspondant à cette surface d'affichage, en utilisant des paramètres de configuration.

6. Système d'affichage (10) selon l'une quelconque des revendications précédentes, comprenant en outre un module d'acquisition (22) configuré pour acquérir chaque commande exercée en relation avec chaque surface d'affichage (20) et pour la transmettre au module de traitement (12);
le module de traitement (12) étant configuré pour traiter chaque commande acquise par le module d'acquisition (22), en fonction de la surface d'affichage (20) correspondant à cette commande.

7. Système d'affichage (10) selon la revendication 6, dans lequel le module de traitement (12) est configuré pour traiter chaque commande acquise par le module d'acquisition (22) selon un référentiel correspondant à la surface d'affichage (20) correspondant à cette commande.

8. Système d'affichage (10) selon l'une quelconque des revendications précédentes, comprenant :
- une surface d'affichage principale (20-1) raccordée audit module de génération graphique (14);
- au moins deux surfaces d'affichage (20-2, 20-3) supplémentaires, avantageusement raccordées au module de génération graphique (14).

9. Système d'affichage (10) selon la revendication 8, dans lequel le module de traitement (12) est configuré pour :
- dans un mode de fonctionnement normal, générer un flux composé comprenant des images destinées à être affichées uniquement par l'une des surfaces d'affichage supplémentaires (20-2, 20-3);
- dans un mode de fonctionnement dégradé, générer un flux composé comprenant des images destinées à être affichées sur chacune des surfaces d'affichage supplémentaires (20-2, 20-3);
chaque surface d'affichage supplémentaire (20-2, 20-3) étant configurée pour recevoir ledit flux graphique composé et pour en extraire des images destinées à être affichées sur cette surface d'affichage (20-2, 20-3).

10. Procédé d'affichage dans un cockpit d'aéronef, comprenant les étapes suivantes :
- générer (110) des images à afficher sur une ou plusieurs surfaces d'affichage, par une ou plusieurs applications (30);
- générer (120) un flux graphique composé comprenant des images issues d'une ou de plusieurs applications (30) et destinées à être affichées sur des surfaces d'affichage différentes ;
- recevoir (130) ledit flux graphique composé par chaque surface d'affichage (20) ;
- extraire (140) des images destinées à être affichées sur la surface d'affichage (20) correspondante.
